# EUROPEAN PATENT APPLICATION

(11) **EP 4 535 383 A1**
(43) Date of publication of application: **09.04.2025**
(21) Application number: 24189493.0
(22) Date of filing: 18.07.2024
(51) Int. Cl.: H01G 4/30, H01G 4/012, H01G 4/232, H01G 4/12

(54) **MULTILAYER ELECTRONIC COMPONENT**

(30) Priority: 04.10.2023 KR 20230131633; 30.11.2023 KR 20230171332; 30.01.2024 KR 20240013673
(71) Applicant: Samsung Electro-Mechanics Co., Ltd., Suwon-si, Gyeonggi-do (KR)
(72) Inventor: Byeon, Gyu Tae, Suwon-si, Gyeonggi-do (KR); Shin, Seung Ho, Suwon-si, Gyeonggi-do (KR); Kim, Ji Yeon, Suwon-si, Gyeonggi-do (KR); Jeon, Kyu Oh, Suwon-si, Gyeonggi-do (KR)
(74) Representative: Grünecker Patent- und Rechtsanwälte PartG mbB

(57) **Abstract**

A multilayer electronic component according to an example embodiment of the present disclosure may include: a body including a dielectric layer and internal electrodes alternately disposed with the dielectric layer in a first direction, and including first and second surfaces opposing each other in the first direction, third and fourth surfaces connected to the first and second surfaces and opposing each other in a second direction, and fifth and sixth surfaces connected to the first to fourth surfaces and opposing each other in a third direction; side margin portions disposed on the fifth and sixth surfaces; and external electrodes disposed on the third and fourth surfaces, and an additional pattern spaced apart from the internal electrodes may be disposed in at least one of a region between the internal electrodes and the fifth surface or a region between the internal electrodes and the sixth surface.

## Description

### CROSS-REFERENCE TO RELATED APPLICATION(S)

The present application claims the benefit of priority to Korean Patent Application Nos. 10-2023-0131633, 10-2023-0171332, and 10-2024-0013673, filed on October 4, 2023, November 30, 2023, and January 30, 2024 in the Korean Intellectual Property Office, the disclosure of which is incorporated herein by reference in its entirety.

### TECHNICAL FIELD

The present disclosure relates to a multilayer electronic component.

### BACKGROUND

A multilayer ceramic capacitor (MLCC), a multilayer electronic component, is a chip-type condenser mounted on the printed circuit boards of various electronic products, such as image display devices including a liquid crystal display (LCD) and a plasma display panel (PDP), computers, smartphones and mobile phones, serving to charge or discharge electricity therein or therefrom.

The multilayer ceramic capacitor may be used as a component in various electronic devices due to having a small size, ensuring high capacitance and being easily mounted, and with the miniaturization and high output power of various electronic devices such as computers and mobile devices, demand for miniaturization and high capacitance of multilayer ceramic capacitors has also been increasing.

Additionally, as industry interest in automotive electrical components has recently increased, a multilayer ceramic capacitor also requires high reliability and high strength characteristics for use in automobiles or infotainment systems.

In a process of printing and stacking internal electrodes on a molded sheet, a slight difference in height between an unprinted portion and a printed portion of the internal electrode accumulates to generate a step portion. Specifically, in a case of a general cutting method as a conventional technique, which has a margin in a width direction, a step portion of a width-direction margin portion in which the unprinted portions of the internal electrode are continuously stacked is much greater than that of a longitudinal margin portion in which the printed portion and the unprinted portion of the internal electrode are stacked alternately. The step portions may bend ends of each sheet to generate stress, which may cause defects such as delamination where a gap between layers is present.

Accordingly, in manufacturing a multilayer ceramic capacitor, by allowing the internal electrodes to be exposed in a width direction of the body, a method to complete the multilayer ceramic capacitor has been developed by removing the cause of step portions through a margin-free design, and separately attaching a side margin portion to an exposed surface of an electrode in a width direction of the chip in a pre-sintering stage after manufacturing such a chip.

However, reliability may be reduced due to easy moisture penetration between the side margin portion and the body, and there may be concern that reliability may further deteriorate when the side margin portion is not properly connected to the body to cause a gap between the side margin portion and the body. Accordingly, a method is required to improve reliability while suppressing step portions caused by internal electrodes.

### SUMMARY

An aspect of the present disclosure is to improve reliability of a multilayer electronic component.

An aspect of the present disclosure is to suppress occurrence of step portions due to internal electrodes.

An aspect of the present disclosure is to suppress occurrence of delamination between dielectric layers.

An aspect of the present disclosure is to improve the capacitance per unit volume of a multilayer electronic component.

However, the aspects of the present disclosure are not limited to the above-described contents, and may be more easily understood in the process of describing specific embodiments of the present disclosure.

According to an aspect of the present disclosure, a multilayer electronic component may include: a body including a dielectric layer and internal electrodes alternately disposed with the dielectric layer in a first direction, and including first and second surfaces opposing each other in the first direction, third and fourth surfaces connected to the first and second surfaces and opposing each other in a second direction, and fifth and sixth surfaces connected to the first to fourth surfaces and opposing each other in a third direction; side margin portions disposed on the fifth and sixth surfaces of the body, respectively; and external electrodes disposed on the third and fourth surfaces of the body, respectively, and at least one additional pattern spaced apart from the internal electrodes may be disposed in at least one of a region between the internal electrodes and the fifth surface of the body or a region between the internal electrodes and the sixth surface of the body.

One of various effects of the present disclosure is to improve reliability of a multilayer electronic component.

One of various effects of the present disclosure is to suppress occurrence of step portions due to internal electrodes.

One of various effects of the present disclosure is to suppress occurrence of delamination between dielectric layers.

One of various effects of the present disclosure is to improve the capacitance per unit volume of a multilayer electronic component.

However, advantages and effects of the present disclosure are not limited to the above-described contents, and may be more easily understood in the process of describing specific embodiments of the present disclosure.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a multilayer electronic component according to an example embodiment of the present disclosure;
FIG. 2 is a perspective view illustrating a body and a side margin portion separated from the multilayer electronic component of FIG. 1 except for an external electrode;
FIG. 3 is a cross-sectional view taken along line I-I' of FIG. 1;
FIG. 4 is a cross-sectional view taken along line II-II' of FIG. 1;
FIG. 5 is a cross-sectional view taken along line III-III' of FIG. 1;
FIG. 6 is an enlarged view of region K1 of FIG. 4;
FIG. 7 is a view corresponding to FIG. 6, according to another example embodiment;
FIG. 8 is a view corresponding to FIG. 6, according to another example embodiment;
FIG. 9 illustrates a ceramic green sheet on which an internal electrode pattern used for manufacturing a multilayer electronic component according to an example embodiment of the present disclosure is printed;
FIG. 10 is a view illustrating cross-sections in first and third directions of a stack body in which the ceramic green sheet of FIG. 9 is stacked;
FIG. 11 is a view corresponding to FIG. 4 according to a first modified example;
FIG. 12 is a view corresponding to FIG. 4 according to a second modified example;
FIG. 13 is a view corresponding to FIG. 4 according to a third modified example;
FIG. 14 is a view corresponding to FIG. 4 according to a fourth modified example;
FIG. 15 is a view corresponding to FIG. 4 according to a fifth modified example;
FIG. 16 is a view corresponding to FIG. 4 according to a sixth modified example;
FIG. 17 is a view corresponding to FIG. 4 according to a seventh modified example; and
FIG. 18 is a view corresponding to FIG. 4 according to an eighth modified example.

### DETAILED DESCRIPTION

Hereinafter, example embodiments of the present disclosure will be described with reference to specific example embodiments and the attached drawings. The embodiments of the present disclosure may, however, be exemplified in many different forms and should not be construed as being limited to the specific embodiments set forth herein. The example embodiments disclosed herein are provided for those skilled in the art to better explain the present disclosure. Therefore, in the drawings, the shapes and dimensions of elements may be exaggerated for clarity, and the same reference numerals will be used throughout to designate the same or like elements.

In addition, in order to clearly describe the present disclosure in the drawings, contents unrelated to the description are omitted, and since sizes and thicknesses of each component illustrated in the drawings are arbitrarily illustrated for convenience of description, the present disclosure is not limited thereto. In addition, components with the same function within the same range of ideas are described using the same reference numerals. Throughout the specification, when a certain portion "includes" or "comprises" a certain component, this indicates that other components are not excluded and may be further included unless otherwise noted.

In the drawings, a first direction may be defined as a thickness T direction, a second direction may be defined as a length L direction, and a third direction may be defined as a width W direction.

### Multilayer Electronic Component

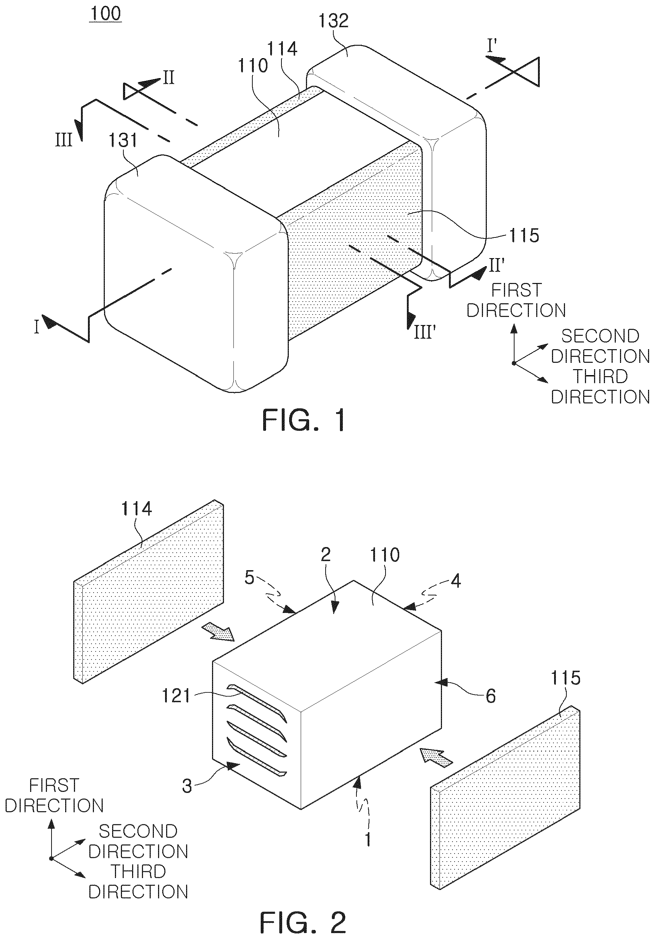

FIG. 1 is a perspective view schematically illustrating a multilayer electronic component according to an example embodiment of the present disclosure.

FIG. 2 is a perspective view illustrating a body and a side margin portion separated from the multilayer electronic component of FIG. 1 except for an external electrode.

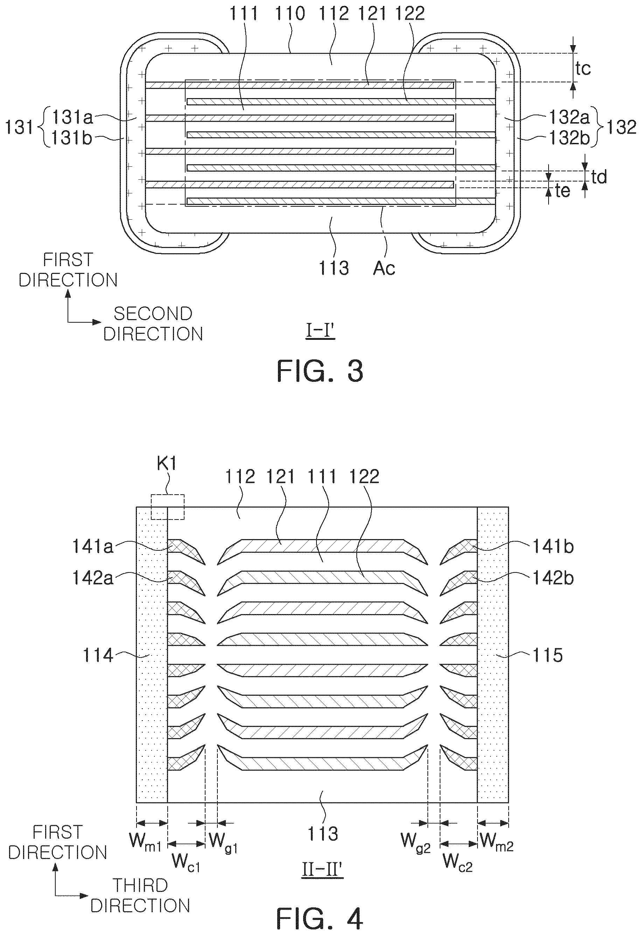

FIG. 3 is a cross-sectional view taken along line I-I' of FIG. 1.

FIG. 4 is a cross-sectional view taken along line II-II' of FIG. 1.

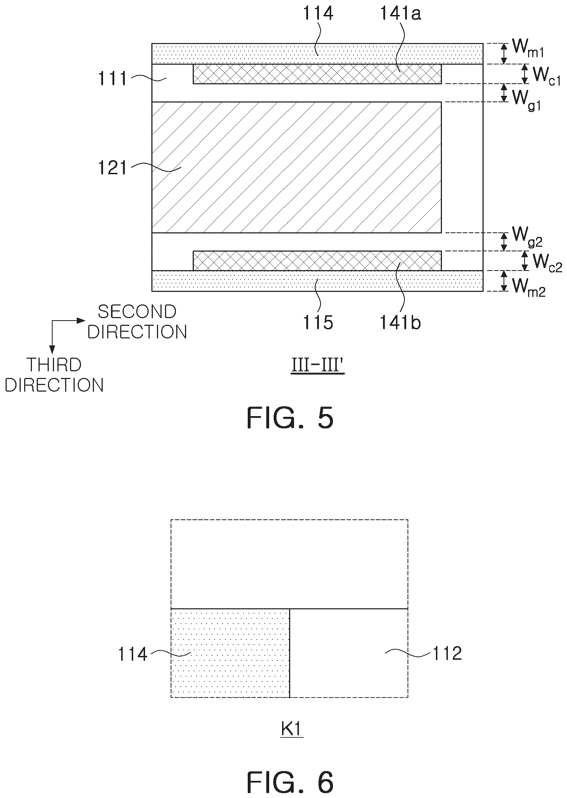

FIG. 5 is a cross-sectional view taken along line III-III' of FIG. 1.

FIG. 6 is an enlarged view of region K1 of FIG. 4.

Hereinafter, referring to FIGS. 1 to 6, a multilayer electronic component according to an example embodiment of the present disclosure will be described in detail.

A multilayer electronic component 100 according to an example embodiment of the present disclosure may include a body including a dielectric layer 111 and internal electrodes 121 and 122 alternately disposed with the dielectric layer in a first direction, and including first and second surfaces 1 and 2 opposing each other in the first direction, third and fourth surfaces 3 and 4 connected to the first and second surfaces and opposing each other in a second direction, and fifth and sixth surfaces 5 and 6 connected to the first to fourth surfaces and opposing each other in a third direction; side margin portions 114 and 115 disposed on the fifth and sixth surfaces; and external electrodes 131 and 132 disposed on the third and fourth surfaces, and additional patterns 141a, 141b, 142a and 142b spaced apart from the internal electrode may be disposed in at least one of a region between the internal electrode and the fifth surface or a region between the internal electrode and the sixth surface.

In a process of printing and stacking internal electrodes on a molded sheet, a slight difference in height between an unprinted portion and a printed portion of the internal electrode accumulates to generate a step portion. Specifically, in a case of a general cutting method as a conventional technique, which has a margin in a width direction, a step portion of a width-direction margin portion in which the unprinted portions of the internal electrode are continuously stacked is much greater than that of a longitudinal margin portion in which the printed portion and the unprinted portion of the internal electrode are stacked alternately. The step portions may bend ends of each sheet to generate stress, which may cause defects such as delamination where a gap between layers is present.

Accordingly, in manufacturing a multilayer ceramic capacitor, by allowing the internal electrodes to be exposed in a width direction of the body, a method to complete the multilayer ceramic capacitor has been developed by removing the cause of step portions through margin-free design, and separately attaching a side margin portion to an exposed surface of an electrode in a width direction of the chip in a pre-sintering stage after manufacturing such a chip.

However, reliability may be reduced due to easy moisture penetration between the side margin portion and the body, and there was a concern that reliability may further deteriorate when the side margin portion was not properly connected to the body to cause a gap between the side margin portion and the body.

According to an example embodiment of the present disclosure, additional patterns 141a, 141b, 142a and 142b spaced apart from the internal electrodes 121 and 122 may be disposed in at least one of a region between the internal electrodes 121 and 122 and the fifth surface or a region between the internal electrodes 121 and 122 and the sixth surface, so that the stress caused by external shocks may be reduced while suppressing the step portion caused by the internal electrode, and even if moisture penetrates between the side margin portion and the body, the moisture has difficulty reaching the internal electrodes, thereby improving moisture resistance reliability.

Hereinafter, each configuration included in the multilayer electronic component 100 according to an example embodiment of the present disclosure will be described.

The body 110 may include dielectric layers 111 and internal electrodes 121 and 122 alternately stacked.

There is no particular limitation on a specific shape of the body 110, but as illustrated, the body 110 may have a hexahedral shape or a shape similar thereto. Due to contraction of ceramic powder particles included in the body 110 during a sintering process, the body 110 may not have a hexahedral shape with a completely straight line, but may have a substantially hexahedral shape.

The body 110 may have first and second surfaces 1 and 2 opposing each other in the first direction, third and fourth surfaces 3 and 4 connected to the first and second surfaces 1 and 2 and opposing each other in the second direction, and fifth and sixth surfaces 5 and 6 connected to the first and second surfaces 1 and 2, connected to the third and fourth surfaces 3 and 4, and opposing each other in a third direction.

In a state in which a plurality of dielectric layers 111 included in the body 110 are sintered, boundaries between adjacent dielectric layers 111 may be integrated to a degree as to be difficult to identify without using a scanning electron microscope (SEM).

According to an example embodiment of the present disclosure, materials included in the dielectric layer 111 are not particularly limited as long as sufficient electrostatic capacitance may be obtained. For example, barium titanate-based materials, lead composite perovskite-based materials, or strontium titanate-based materials may be used. The barium titanate-based material may include BaTiO₃-based ceramic powder particles, and examples of the ceramic powder particles may include BaTiO₃, (Ba₁₋ₓCaₓ)TiO₃, Ba(Ti_{1-y}Ca_{y})O₃ or (Ba₁₋ₓCaₓ)(Ti_{1-y}Zr_{y})O₃ which is formed by partially employing calcium (Ca) and zirconium (Zr) in BaTiO₃, or Ba(Ti_{1-y}Zr_{y})O₃.

As the material included in the dielectric layer 111, various ceramic additives, organic solvents, binders, dispersants, and the like, may be added to powder particles such as barium titanate (BaTiO₃) according to the purpose of the present disclosure.

The internal electrodes 121 and 122 may be disposed alternately with the dielectric layer 111.

The internal electrodes 121 and 122 may include first and second internal electrodes 121 and 122. The first and second internal electrodes 121 and 122 may be alternately disposed to face each other with the dielectric layer 111 included in the body 110 interposed therebetween, and may be exposed to the third and fourth surfaces 3 and 4 of the body 110, respectively.

In an example embodiment, the internal electrodes 121 and 122 may include first and second internal electrodes 121 and 122 alternately disposed in the first direction with the dielectric layer 111 interposed therebetween, and the first internal electrode 121 may be connected to the third surface, and the second internal electrode 122 may be connected to the fourth surface.

Referring to FIGS. 2 to 4, the first internal electrode 121 may be spaced apart from the fourth, fifth, and sixth surfaces 4, 5 and 6 and may be exposed through the third surface 3, and the second internal electrode 122 may be spaced apart from the third, fifth, and sixth surfaces 3, 5 and 6 and may be exposed through the fourth surface 4.

In this case, the first and second internal electrodes 121 and 122 may be electrically separated from each other by the dielectric layer 111 disposed in a middle.

The internal electrodes 121 and 122 may include one or more of nickel (Ni), copper (Cu), palladium (Pd), silver (Ag), gold (Au), platinum (Pt), tin (Sn), tungsten (W), and titanium (Ti) and alloys thereof.

In an example embodiment, both ends of the internal electrodes 121 and 122 in the third direction may have an average thickness smaller than a central portion of the internal electrodes 121 and 122 in the third direction. According to an example embodiment of the present disclosure, even if additional patterns 141a, 141b, 142a and 142b are disposed, a step portion may be formed in a region in which the additional pattern and the internal electrode are spaced apart from each other, and thus, in a compression process, an average thickness of both ends of the internal electrodes 121 and 122 in the third direction may be smaller than an average thickness of a central portion of the internal electrodes 121 and 122 in the third direction. However, as compared to a case in which there is no additional pattern, a difference in average thickness between both ends and the central portion of the internal electrodes 121 and 122 in the third direction may be small.

In this case, when the internal electrodes 121 and 122 are divided into 10 equal portions in the third direction, both ends of the internal electrodes 121 and 122 in the third direction may refer to a first region and a last region, and the central portion of the internal electrodes 121 and 122 in the third direction may refer to a second region to a ninth region. As an example of a specific measurement method, cross-sections in the first and third directions cut from the center of the body 110 in the second direction may be scanned and measured using a scanning electron microscope (SEM) . After selecting 10 internal electrodes from the scanned image, thicknesses may be measured at five points spaced apart from each other at equal intervals in both ends one internal electrode 121 or 122 in the third direction and five points spaced apart from each other at equal intervals in a central portion of the internal electrodes 121 and 122 in the third direction, and values of a total of 50 points at both ends and the central portion of the internal electrodes 121 and 122 in the third direction may be averaged and compared.

In an example embodiment, both ends of the internal electrodes 121 and 122 in the third direction may have a shape bent toward a center of the body in the first direction. Even if additional patterns 141a, 141b, 142a and 142b are disposed according to an example embodiment of the present disclosure, a step portion may be formed in a region in which the additional pattern and the internal electrode are spaced apart from each other, and thus, in the compression process, both ends of the internal electrodes 121 and 122 in the third direction may have a shape bent toward the center of the body in the first direction. However, as compared to the case in which there is no additional pattern, a degree to which both ends of the internal electrodes 121 and 122 are bent in the third direction may be low.

The additional patterns 141a, 141b, 142a and 142b may be spaced apart from the internal electrodes 121 and 122 in at least one of a region between the internal electrodes 121 and 122 and the fifth surface or a region between the internal electrodes 121 and 122 and the sixth surface.

The additional patterns 141a, 141b, 142a and 142b may serve to alleviate a step portion caused by the internal electrodes, and may sever to reduce stress caused by external shocks, and the like. Additionally, the additional patterns 141a, 141b, 142a and 142b may also serve to absorb stress caused by cutting in a process of cutting a stack body in units of chips. Additionally, the additional patterns 141a, 141b, 142a and 142b may be spaced apart from the internal electrodes 121 and 122 and may be disposed outside the body 110 rather than the internal electrodes 121 and 122 to prevent moisture, and the like, from reaching the internal electrodes, thereby serving to improve moisture resistance reliability.

In an example embodiment, the additional patterns 141a, 141b, 142a and 142b may be spaced apart from the third and fourth surfaces of the body 110. Accordingly, since the additional patterns 141a, 141b, 142a, and 142b are not connected to the external electrodes 131 and 132, even if the moisture, and the like, penetrates and reaches the additional patterns 141a, 141b, 142a and 142b, moisture resistance reliability may not be deteriorated. Additionally, it is not necessary to form the additional patterns 141a, 141b, 142a and 142b with materials such as insulating materials, and the internal electrodes 121 and 122 may be printed at once using the same paste, thereby improving productivity.

In an example embodiment, separation distances Wg1 and Wg2 between the additional patterns 141a, 141b, 142a and 142b and the internal electrodes 121 and 122 are not particularly limited, but may be, for example, 15 to 45 um. When Wg1 and Wg2 are less than 15 um, because the internal electrodes and the additional patterns are electrically connected, the effect of improving moisture resistance reliability by the additional pattern may be insufficient, and when Wg1 and Wg2 are more than 45 um, the capacitance per unit volume of the multilayer electronic component may be deteriorated.

In an example embodiment, among both ends of the additional patterns 141a, 141b, 142a and 142b, an average thickness of an end closer to the internal electrodes 121 and 122 may be smaller than an average thickness of a central portion of the additional pattern in the third direction. As described above, a step portion may be formed in a region in which the additional patterns 141a, 141b, 142a 142b and the internal electrodes 121 and 122 are spaced apart from each other, and thus, in the compression process, a thickness of the end closest to the internal electrode, among both ends of the additional pattern, may be smaller.

In an example embodiment, among both ends of the additional patterns 141a, 141b, 142a and 142b, an average thickness of an end closer to the internal electrodes 121 and 122 may be smaller than an average thickness of the other end contacting one of the side margin portions 114 and 115.

Additionally, among both ends of the additional patterns 141a, 141b, 142a and 142b, an end closer to the internal electrodes 121 and 122 may have a shape bent toward the center of the body in the first direction. In this case, the other end of the additional patterns 141a, 141b, 142a and 142b may not be bent toward the center in the first direction.

The material included in the additional patterns 141a, 141b, 142a and 142b is not particularly limited. The additional patterns 141a, 141b, 142a 142b may be formed by including an insulating material, and may include one or more of nickel (Ni), copper (Cu), palladium (Pd), silver (Ag), gold (Au), platinum (Pt), tin (Sn), tungsten (W), titanium (Ti) and alloys thereof. Additionally, the additional patterns 141a, 141b, 142a and 142b may be formed of the same material as the internal electrodes 121 and 122, and may thus be printed together with the internal electrode pattern, thereby simplifying the process and improving productivity. Additionally, to order to improve the stress relief effect, the additional patterns 141a, 141b, 142a and 142b may include graphene, and the like.

Third direction widths Wc1 and Wc2 of the additional patterns 141a, 141b, 142a and 142b are not particularly limited. For example, each of Wc1 and Wc2 may be 15 to 30 µm.

Referring to FIGS. 4 and 5, in an example embodiment, the additional patterns 141a, 141b, 142a and 142b may include first additional patterns 141a and 142a disposed in a region between the internal electrodes 121 and 122 and the fifth surface, and second additional patterns 141b and 142b disposed in a region between the internal electrode and the sixth surface.

In this case, the first additional patterns 141a and 142a may be disposed to contact the fifth surface, and the second additional patterns 141b and 142b may be disposed to contact the sixth surface. Accordingly, the first additional patterns 141a and 142a be disposed to contact a first side margin portion on the fifth surface, and the second additional patterns 141b and 142b may be disposed to contact a second side margin portion on the sixth surface. Additionally, in a stacking process, the additional patterns 141a, 141b, 142a and 142b may absorb stress to minimize deformation of the body.

However, the present disclosure is not limited thereto, and the additional patterns 141a, 141b, 142a and 142b may have various forms, such as modified examples described below. For example, the first additional pattern may be spaced apart from the fifth surface, and the second additional pattern may be spaced apart from the sixth surface. Additionally, the first additional pattern may be spaced apart from the fifth surface, and the second additional pattern may be spaced apart from the sixth surface. Additionally, the additional pattern may be disposed only in one of the region between the internal electrode and the fifth surface and the region between the internal electrode and the sixth surface.

An average thickness td of the dielectric layer 111 is not particularly limited, but may be, for example, 0.05 um to 3.0 um. The average thickness te of the internal electrodes 121 and 122 is not particularly limited, but may be, for example, 0.05 um to 3.0 um. Additionally, the average thickness td of the dielectric layer 111 and the average thickness te of the internal electrodes 121 and 122 may be arbitrarily set according to desired characteristics or purposes. For example, in the case of small IT electronic components to achieve miniaturization and high capacitance, the average thickness td of the dielectric layer 111 may be 0.4 um or less, and the average thickness te of the internal electrodes 121 and 122 may be 0.4 um or less. The average thickness of the additional patterns 141a, 141b, 142a and 142b is not particularly limited, and may have a similar thickness to the internal electrodes 121 and 122.

The average thickness td of the dielectric layer 111 and the average thickness te of the internal electrodes 121 and 122 refers to first directional sizes of the dielectric layer 111 and the internal electrodes 121 and 122, respectively. The average thickness td of the dielectric layer 111 and the average thickness te of the internal electrodes 121 and 122 may be measured by scanning the first and second directional cross-sections of the body 110 with a scanning electron microscope (SEM) of 10,000X magnification. More specifically, to obtain the average thickness td of the dielectric layer 111, an average value may be measured by measuring the thickness at multiple areas of one dielectric layer 111, for example, 30 areas in which are spaced apart from each other at equal intervals in the second direction. Additionally, to obtain the average thickness te of the internal electrodes 121 and 122, an average value may be measured by measuring the thickness at multiple areas of one internal electrode 121 or 122, for example, 30 areas in which are spaced apart from each other at equal intervals in the second direction. The 30 areas with the equal intervals may be designated in the capacitance formation portion Ac. Meanwhile, when the average value is measured by extending an average value measurement up to 10 dielectric layers 111 and 10 internal electrodes 121 and 122, the average thickness td of the dielectric layers 111 and the average thickness te of the internal electrodes 121 and 122 may be further generalized.

The body 110 may include an active portion Ac disposed inside the body 110 and having a capacitance formed therein by including a first internal electrode 121 and a second internal electrode 122 disposed to face each other with the dielectric layer 111 interposed therebetween, and cover portions 112 and 113 formed above and below the active portion Ac in the first direction.

Additionally, the active portion Ac is a portion that contributes to forming the capacitance of a capacitor, and may be formed by repeatedly stacking a plurality of first and second internal electrodes 121 and 122 with the dielectric layer 111 interposed therebetween.

The upper cover portion 112 and the lower cover portion 113 may be formed by stacking a single dielectric layer or two or more dielectric layers in a thickness direction on upper and lower surfaces of the active portion Ac, respectively, and may basically serve to prevent damage to the internal electrode due to physical or chemical stress.

The upper cover portion 112 and the lower cover portion 113 do not include internal electrodes and may include the same material as the dielectric layer 111.

That is, the upper cover portion 112 and the lower cover portion 113 may include a ceramic material, for example, a barium titanate (BaTiO₃)-based ceramic material.

Meanwhile, the thickness of the cover portions 112 and 113 is not particularly limited. However, in order to more easily achieve miniaturization and high capacitance of the multilayer electronic component, the thickness tc of the cover portions 112 and 113 may be 80 um or less.

An average thickness tc of the cover portions 112 and 113 may refer to a first directional size, and may be a value obtained by averaging the first directional values of the cover portions 112 and 113 measured at five areas spaced apart from each other by equal intervals in an upper portion or a lower portion of the capacitance formation portion Ac.

The side margin portions 114 and 115 may be disposed on the fifth and sixth surfaces of the body 110.

The side margin portions 114 and 115 may include a first side margin portion 114 disposed on the fifth surface 5 of the body 110 and a second side margin portion 115 disposed on the fifth surface 5. That is, the margin portions 114 and 115 may be disposed on both end surfaces of the body 110 in the third direction.

The side margin portions 114 and 115 may be disposed to cover both end surfaces of the cover portions 112 and 113 in the third direction.

The side margin portions 114 and 115 may basically serve to prevent damage to the internal electrodes due to physical or chemical stress.

The side margin portions 114 and 115 may be formed by stacking a single dielectric layer or two or more dielectric layers on both end surfaces of the body 110 in the third direction. The side margin portions 114 and 115 may have a different composition from the dielectric layer 111, may have a different grain size from the dielectric layer 111 and a different porosity from the dielectric layer 111. However, the present disclosure is not limited thereto, the side margin portions 114 and 115 may have the same composition as the dielectric layer 111.

Referring to FIG. 6, an upper end of the side margin portions 114 and 115 in the first direction may be disposed on the same plane as the second surface, and a lower end of the side margin portions in the first direction may be disposed on the same plane as the first surface.

However, in consideration of manufacturing errors in the side margin portion, and the like, the side margin portions do not necessarily have to have this shape.

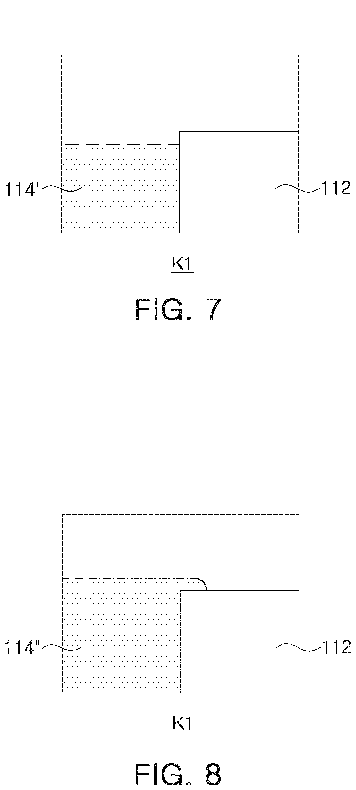

For example, according to another example embodiment of the present disclosure, as illustrated in FIG. 7, an upper end of side margin portions 114' and 115' in the first direction may be disposed to be lower than the second surface in the first direction, and a lower end of the side margin portions 114' and 115' in the first direction may be disposed to be higher than the first surface in the first direction. In this case, an upper end of side margin portions 114b' and 115b' in the first direction may be in contact with the upper cover portion 112 on the third and fourth surfaces, and a lower end of the side margin portions 114b' and 115b' in the first direction may be in contact with the lower cover portion 113 on the third and fourth surfaces.

Additionally, according to another example embodiment of the present disclosure, as illustrated in FIG. 8, an upper end of side margin portions 114'' and 115'' in the first direction may be disposed to be lower than the second surface in the first direction, and a lower end of the side margin portions 114'' and 115'' in the first direction may be disposed to be lower than the first surface in the first direction. In this case, at least a portion of the side margin portions 114'' and 115'' may be disposed on the first and second surfaces.

Average widths Wm1 and Wm2 of the side margin portions 114 and 115 in the third direction do not need to be particularly limited. For example, each of Wm1 and Wm2 may be 50 um or less, and for miniaturization and high capacitance, each of Wm1 and Wm2 may be 20um or less. Here, a third directional width of the side margin portions 114 and 115 may refer to a third directional side of the side margin portions 114 and 115.

Meanwhile, according to an example embodiment of the present disclosure, the internal electrodes 121 and 122 may be not exposed to the fifth and sixth surfaces of the body, and the additional patterns 141a, 141b, 142a and 142b spaced apart from the internal electrodes 121 and 122 may be disposed in at least one of the region between the internal electrodes 121 and 122 and the fifth surface or the region between the internal electrodes 121 and 122 and the sixth surface, so that the third directional width of the side margin portions 114 and 115 may be reduced, thereby improving the capacitance per unit volume as well as securing moisture resistance reliability. For example, the average widths Wm1 and Wm2 of the side margin portions 114 and 115 in the third direction may be 5 um or more and 15 um or less, and may be 5 um or more and 10 um or less.

Meanwhile, the widths of the side margin portions 114 and 115 for each position in the first direction may be substantially the same, and a deviation in width may be within 5%. This may be because the side margin portions 114 and 115 are formed by attaching a ceramic green sheet for the side margin portion to a side surface of the body 110.

The external electrodes 131 and 132 may be disposed on the third surface 3 and the fourth surface 4 of the body 110.

The external electrodes 131 and 132 may include first and second external electrodes 131 and 132 respectively disposed on the third and fourth surfaces 3 and 4 of the body 110 and connected to the first and second internal electrodes 121 and 122, respectively.

Referring to FIG. 1, the external electrodes 131 and 132 may be disposed to cover both end surfaces of the side margin portions 114 and 115 in the second direction.

In this example embodiment, a structure in which the multilayer electronic component 100 has two external electrodes 131 and 132 is described, but the number or shape of the external electrodes 131 and 132 may be changed depending on the shape of the internal electrodes 121 and 122 or other purposes.

In an example embodiment, the external electrodes 131 and 132 may include a first external electrode 131 disposed on the third surface of the body 110 and a second external electrode 132 disposed on the fourth surface of the body 110, and the first external electrode 131 may cover one end of the side margin portions 114 and 115 in the second direction, and the second external electrode 132 may cover the other end of the side margin portions 114 and 115 in the second direction.

Meanwhile, the external electrodes 131 and 132 may be formed using any material as long as the material has electrical conductivity, such as metals, and the specific material may be determined in consideration of electrical properties, structural stability, and the like, and further, the external electrodes 131 and 132 may have a multilayer structure.

For example, the external electrodes 131 and 132 may include electrode layers 131a and 132a disposed on the body 110 and plating layers 131b and 132b formed on the electrode layers 131a and 132a.

For more specific examples of the electrode layers 131a and 132a, the electrode layers 131a and 132a may be fired electrodes including conductive metals and glass, or may be resin-based electrodes including conductive metals and a resin.

Additionally, the electrode layers 131a and 132a may be formed by sequentially forming a fired electrode and a resin-based electrode on the body. Additionally, the electrode layers 131a and 132a may be formed by transferring a sheet including conductive metal onto the body, or may be formed by transferring a sheet including a conductive metal onto the fired electrode.

As the conductive metal included in the electrode layers 131a and 132a, a material having excellent electrical conductivity may be used and is not particularly limited. For example, the conductive metal may be one or more of nickel (Ni), copper (Cu), and alloys thereof.

The plating layers 131b and 132b may serve to improve mounting characteristics. The types of plating layers 131b and 132b are not particularly limited, and the plating layers 131b and 132b may be plating layers including one or more of Ni, Sn, Pd, and alloys thereof, and may be formed of a plurality of layers.

For more specific examples of the plating layers 131b and 132b, the plating layers 131b and 132b may be Ni plating layers or Sn plating layers, and may be in the form in which the Ni plating layer and the Sn plating layer are sequentially formed on the electrode layers 131a and 132a, or may be in the form in which the Sn plating layer, the Ni plating layer, and the Sn plating layer are formed sequentially. Additionally, the plating layers 131b and 132b may include a plurality of Ni plating layers and/or a plurality of Sn plating layers.

A size of the multilayer electronic component 100 does not need to be particularly limited.

However, in order to achieve both miniaturization and high capacitance, because the thickness of the dielectric layer and the internal electrodes must be thinned to increase the number of stacks, the reliability improvement effect according to the present disclosure may be more remarkable in the multilayer electronic component 100 having a size of 1005 (length × width, 1.0 mm × 0.5 mm) or less.

In consideration of manufacturing errors, external electrode size, and the like, when a length of the multilayer electronic component 100 is 1.1 mm or less and a width thereof is 0.55 mm or less, an effect of improving reliability and capacitance per unit volume according to the present disclosure may be more remarkable. Here, the length of the multilayer electronic component 100 refers to a maximum size of the multilayer electronic component 100 in the second direction, and the width of the multilayer electronic component 100 may refer to a maximum size of the multilayer electronic component 100 in the third direction.

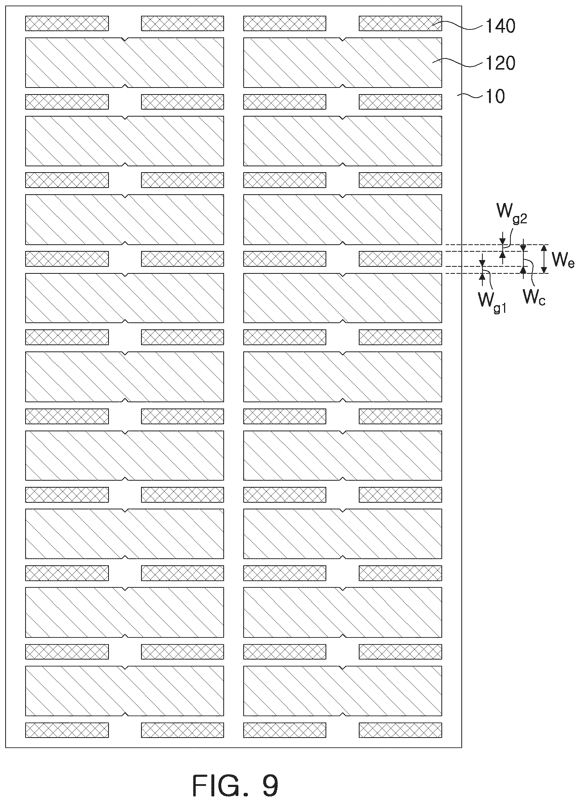

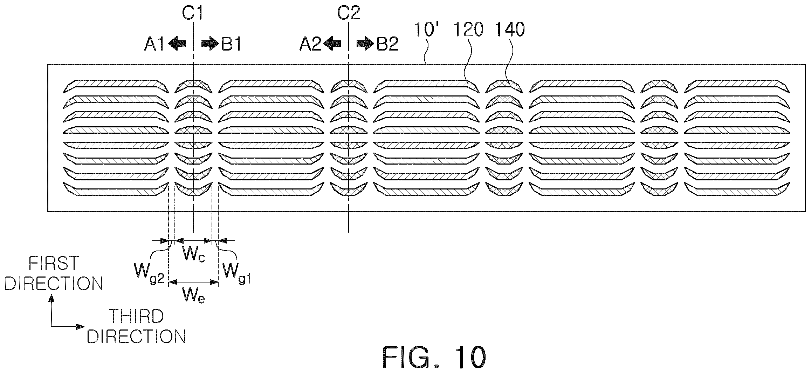

FIG. 9 illustrates a ceramic green sheet printed with an internal electrode pattern used to manufacture a multilayer electronic component according to an example embodiment of the present disclosure. FIG. 10 illustrates first and third directional cross-sections of a stack body obtained by stacking the ceramic green sheet of FIG. 9.

Referring to FIGS. 9 and 10, a method of manufacturing a multilayer electronic component according to an example embodiment of the present disclosure will be described.

First, after printing the internal electrode pattern 120 and the additional pattern 140 on the ceramic green sheet 10 as illustrated in FIG. 9, a plurality of ceramic green sheets 10 are stacked and compressed to form a stack body 10'.

Then, referring to FIG. 10, the stack body 10' may be cut by selecting reference cutting lines C1 and C2 based on the additional pattern 140, thus obtaining a body of a unit chip. When the stack body 10' is cut exactly according to the reference cutting lines C1 and C2 of FIG. 10, the additional pattern 140 may be exposed to the fifth and sixth surfaces of the body.

Then, when one or more dielectric sheets for the side margin portion are attached to the fifth and sixth surfaces of the body as illustrated in FIG. 2, the first additional patterns 141a and 142a may be disposed to contact the first side margin portion on the fifth surface, and the second additional patterns 141b and 142b may be disposed to contact the second side margin portion on the sixth surface.

Then, after proceeding with a sintering process, the multilayer electronic component may be obtained by forming the external electrodes 131 and 132 on the third and fourth surfaces of the body 110.

On the other hand, when dispersion in the cutting process occurs, the stack body 10' is not cut exactly according to the reference cutting lines C1 and C2, and may be cut on the left A1 or on the right B1 of the first reference cutting line C1, or may be cut on the left A2 or on the right B2 of the second reference cutting line C2.

According to the distribution of the cutting process, the multilayer electronic component according to an example embodiment of the present disclosure may have various forms of modified examples, as described below.

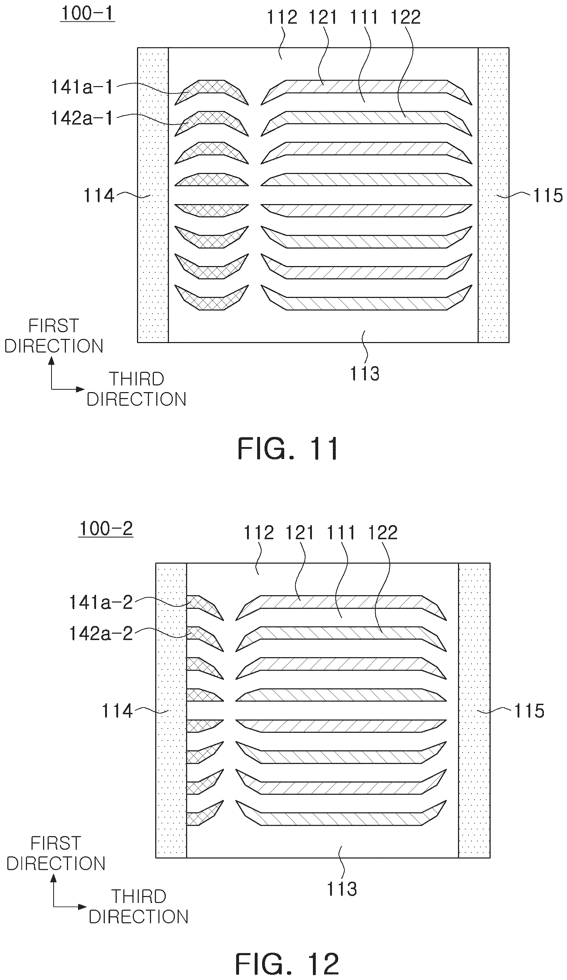

FIG. 11 is a view corresponding to FIG. 4 according to a first modified example. When cutting on the left A1 of the first reference cutting line C1 and on the left A2 of the second reference cutting line C2, as illustrated in FIG. 11, a multilayer electronic component 100-1 in which additional patterns 141a-1 and 142a-1 are disposed only between the first side margin portion 114 and the internal electrodes 121 and 122 may be obtained. Additionally, as illustrated in FIG. 11, the additional patterns 141a-1 and 142a-1 may have a shape spaced apart from the first side margin portion 114.

FIG. 12 is a view corresponding to FIG. 4 according to a second modified example. When cutting on the first reference cutting line C1 and the left side A2 of the second reference cutting line C2, as illustrated in FIG. 12, a multilayer electronic component 100-2 in which additional patterns 141a-2 and 142a-2 are disposed only between the first side margin 114 and the internal electrodes 121 and 122 may be obtained. Additionally, as illustrated in FIG. 12, the additional patterns 141a-2 and 142a-2 may have a shape in contact with the first side margin portion 114.

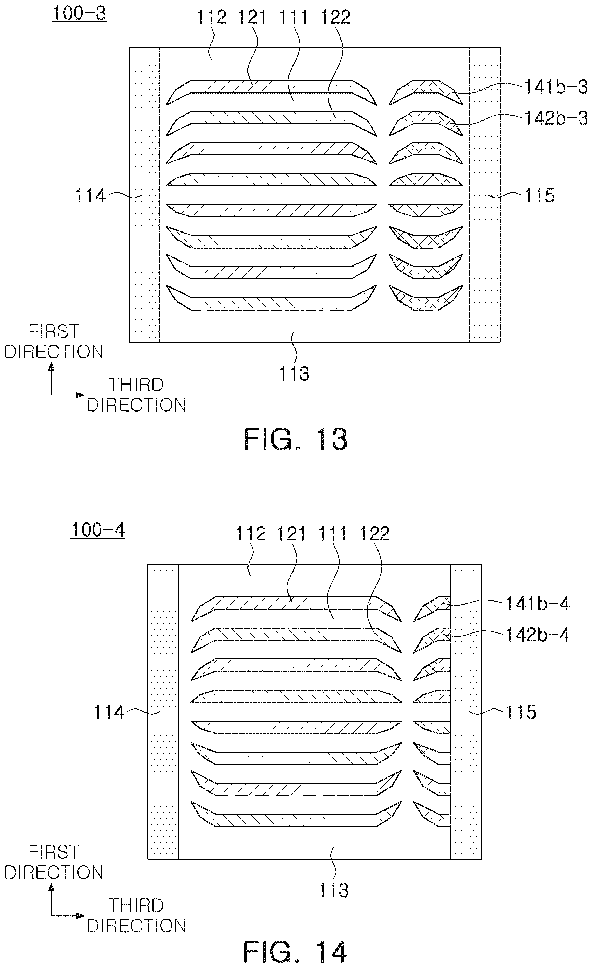

FIG. 13 is a view corresponding to FIG. 4 according to a third modified. When cutting on the right B1 of the first reference cutting line C1 and on the right B2 of the second reference cutting line C2, as illustrated in FIG. 13, a multilayer electronic component 100-3 in which additional patterns 141b-3 and 142b-3 are disposed only between the second side margin portion 115 and the internal electrodes 121 and 122 may be obtained. Additionally, as illustrated in FIG. 13, the additional patterns 141b-3 and 142b-3 may have a shape spaced apart from the second side margin portion 115.

FIG. 14 is a view corresponding to FIG. 4 according to a fourth modified example. When cutting on the right side B1 of the first reference cutting line C1 and the second reference cutting line C2, as illustrated in FIG. 14, a multilayer electronic component 100-4 in which additional patterns 141b-4 and 142b-4 are disposed only between the second side margin portion 115 and the internal electrodes 121 and 122 may be obtained. Additionally, as illustrated in FIG. 14, the additional patterns 141b-4 and 142b-4 may have a shape in contact with the second side margin portion 115.

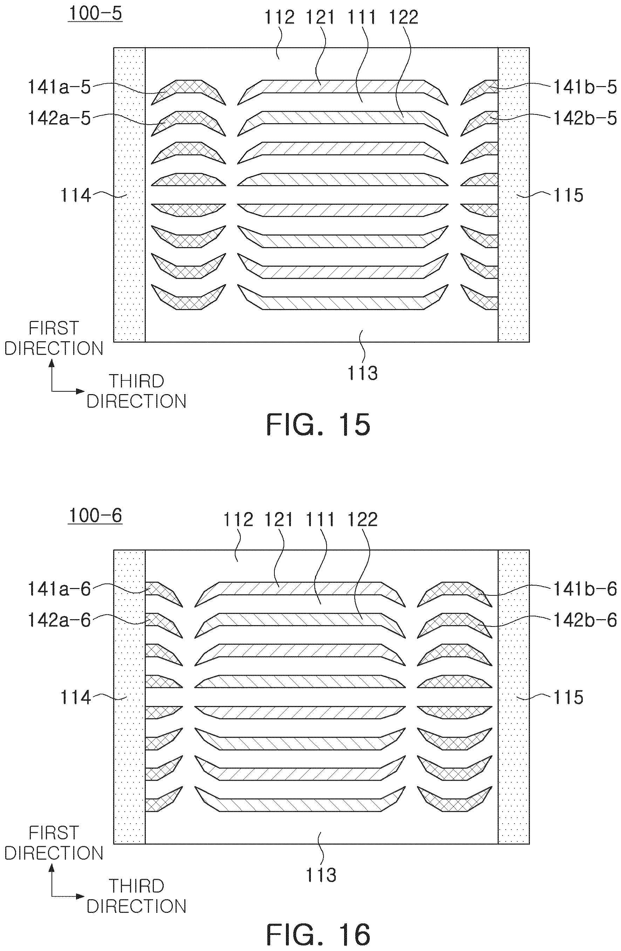

FIG. 15 is a view corresponding to FIG. 4 according to a fifth modified example. When cutting on the left side A1 of the first reference cutting line C1 and the second reference cutting line C2, as illustrated in FIG. 15, a multilayer electronic component 100-5 in which first additional patterns 141a-5 and 142a-5 are disposed between the first side margin 114 and the internal electrodes 121 and 122, and second additional patterns 141b-5 and 142b-5 are disposed between the second side margin 115 and the internal electrodes 121 and 122 may be obtained. Additionally, as illustrated in FIG. 15, the first additional patterns 141a-5 and 142a-5 may be spaced apart from the first side margin portion 114, and the second additional patterns 141b-5 and 142b-5 may be in contact with the second side margin portion 115.

FIG. 16 is a view corresponding to FIG. 4 according to a sixth modified example. When cutting on the first reference cutting line C1 and the right side B2 of the second reference cutting line C2, as illustrated in FIG. 16, a multilayer electronic component 100-6 in which first additional patterns 141a-6 and 142a-6 are disposed between the first side margin portion 114 and the internal electrodes 121 and 122, and second additional patterns 141b-6 and 142b-6 are disposed between the second side margin portion 115 and the internal electrodes 121 and 122 may be obtained. Additionally, as illustrated in FIG. 16, the first additional patterns 141a-6 and 142a-6 may be in contact with the first side margin portion 114, and the second additional patterns 141b-6 and 142b-6 may be spaced apart from the second side margin portion 115.

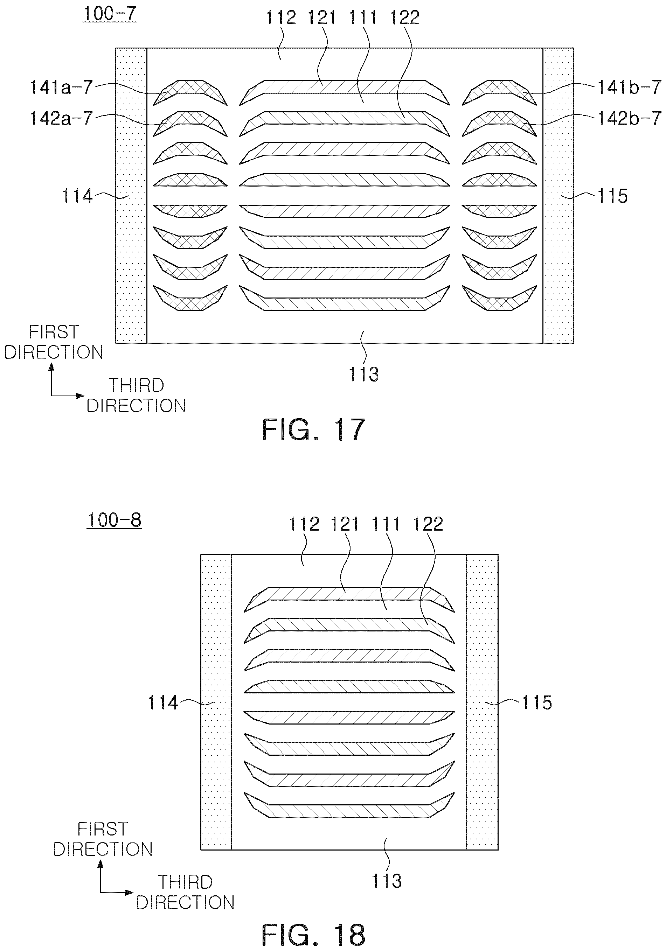

FIG. 17 is a view corresponding to FIG. 4 according to a seventh modified example. When cutting on the left A1 of the first reference cutting line C1 and on the right B2 of the second reference cutting line C2, as illustrated in FIG. 17, a multilayer electronic component 100-7 in which first additional patterns 141a-7 and 142a-7 may be disposed between the first side margin portion 114 and the internal electrodes 121 and 122, and second additional patterns 141b-7 and 142b-7 are disposed between the second side margin 115 and the internal electrodes 121 and 122 may be obtained. Additionally, as illustrated in FIG. 17, the first additional patterns 141a-7 and 142a-7 may be spaced apart from the first side margin portion 114, and the second additional patterns 141b-7 and 142b-7 may be spaced apart from the second side margin portion 115.

FIG. 18 is a view corresponding to FIG. 4 according to an eighth modified example. When cutting on the right B1 of the first reference cutting line C1 and on the left A2 of the second reference cutting line C2, as illustrated in FIG. 18, a multilayer electronic component 100-8 without additional patterns may be obtained. Even if the multilayer electronic component 100-8 does not include an additional pattern, in the cutting process, the additional pattern 140 may serve to absorb cutting stress and may have the effect of suppressing an occurrence of delamination between dielectric layers.

Although the example embodiment of the present disclosure has been described in detail above, the present disclosure is not limited to the above-described embodiments and the accompanying drawings but is defined by the appended claims. Therefore, those of ordinary skill in the art may make various replacements, modifications, or changes without departing from the scope of the present disclosure defined by the appended claims, and these replacements, modifications, or changes should be construed as being included in the scope of the present disclosure.

In addition, the expression 'an example embodiment' used in the present disclosure does not mean the same embodiment, and is provided to emphasize and explain different unique characteristics. However, the embodiments presented above do not preclude being implemented in combination with the features of another embodiment. For example, although items described in a specific embodiment are not described in another embodiment, the items may be understood as a description related to another embodiment unless a description opposite or contradictory to the items is in another embodiment.

In the present disclosure, the terms are merely used to describe a specific embodiment, and are not intended to limit the present disclosure. Singular forms may include plural forms as well unless the context clearly indicates otherwise.

## Claims

1. A multilayer electronic component, comprising:
a body including a dielectric layer and internal electrodes alternately disposed with the dielectric layer in a first direction, and including first and second surfaces opposing each other in the first direction, third and fourth surfaces connected to the first and second surfaces and opposing each other in a second direction, and fifth and sixth surfaces connected to the first to fourth surfaces and opposing each other in a third direction;
side margin portions disposed on the fifth and sixth surfaces of the body, respectively; and
external electrodes disposed on the third and fourth surfaces of the body, respectively,
wherein at least one additional pattern spaced apart from the internal electrodes is disposed in at least one of a region between the internal electrodes and the fifth surface of the body or a region between the internal electrodes and the sixth surface of the body.

2. The multilayer electronic component according to claim 1, wherein an average thickness of both ends of one of the internal electrodes in the third direction is smaller than an average thickness of a central portion of the one of the internal electrodes in the third direction.

3. The multilayer electronic component according to claim 1, wherein both ends of one of the internal electrodes in the third direction have a shape bent toward a center of the body in the first direction.

4. The multilayer electronic component according to claim 1, wherein the at least one additional pattern is spaced apart from the third and fourth surfaces of the body.

5. The multilayer electronic component according to claim 1, wherein a separation distance between the at least one additional pattern and the internal electrodes in the third direction is 15 to 45 µm.

6. The multilayer electronic component according to claim 1, wherein among both ends of the at least one additional pattern in the third direction, an average thickness of an end closer to the internal electrodes is smaller than an average thickness of a central portion of the at least one additional pattern in the third direction.

7. The multilayer electronic component according to claim 1, wherein among both ends of the at least one additional pattern in the third direction, an end closest to the internal electrodes has a shape bent toward a center of the body in the first direction.

8. The multilayer electronic component according to claim 1, wherein an upper end of one of the side margin portions in the first direction is disposed to be lower than the second surface of the body in the first direction, and a lower end of the one of the side margin portions in the first direction is disposed to be higher than the first surface of the body in the first direction.

9. The multilayer electronic component according to claim 1, wherein an upper end of one of the side margin portions in the first direction is disposed to be higher than the second surface of the body in the first direction, and a lower end of the one of the side margin portions in the first direction is disposed to be lower than the first surface of the body in the first direction.

10. The multilayer electronic component according to claim 1, wherein the at least one additional pattern includes a first additional pattern disposed in a region between the internal electrodes and the fifth surface of the body and a second additional pattern disposed in a region between the internal electrodes and the sixth surface of the body.

11. The multilayer electronic component according to claim 10, wherein the first additional pattern is disposed to contact the fifth surface of the body, and the second additional pattern is disposed to contact the sixth surface of the body.

12. The multilayer electronic component according to claim 10, wherein the first additional pattern is disposed to contact the fifth surface of the body, and the second additional pattern is disposed to be spaced apart from the sixth surface of the body.

13. The multilayer electronic component according to claim 10, wherein the first additional pattern is spaced apart from the fifth surface of the body, and the second additional pattern is spaced apart from the sixth surface of the body.

14. The multilayer electronic component according to claim 10, wherein the at least one additional pattern is disposed only in one of the region between the internal electrodes and the fifth surface of the body or the region between the internal electrodes and the sixth surface of the body.

15. The multilayer electronic component according to claim 1, wherein the external electrodes include a first external electrode disposed on the third surface of the body and a second external electrode disposed on the fourth surface of the body, and
the first external electrode covers one end of one of the side margin portions in the second direction, and the second external electrode covers another end of the one of the side margin portions in the second direction.
